# EUROPÄISCHE PATENTSCHRIFT

(11) **EP 0 986 738 B1**
(45) Veröffentlichungstag und Bekanntmachung des Hinweises auf die Patenterteilung: **14.11.2001**
(21) Anmeldenummer: 98930773.1
(22) Anmeldetag: 30.05.1998
(51) Int. Cl.: G01F 1/66

(54) **EINRICHTUNG ZUM BEFESTIGEN EINES ULTRASCHALLWANDLERS AN EINEM MESSGERÄT**
DEVICE FOR FASTENING AN ULTRASOUND TRANSDUCER TO A MEASURING DEVICE
DISPOSITIF DE FIXATION D'UN TRANSDUCTEUR A ULTRASONS SUR UN APPAREIL DE MESURE

(30) Priorität: 05.06.1997 DE 19723488
(43) Veröffentlichungstag der Anmeldung: 22.03.2000
(73) Patentinhaber: ELSTER PRODUKTION GMBH, 55252 Mainz-Kastel (DE)
(72) Erfinder: LÖBER, Wolfgang, D-65510 Hünstetten (DE); WETZEL, Volker, D-55299 Nackenheim (DE); LOETZ-DAUER, Volker, D-65207 Wiesbaden (DE)
(74) Vertreter: Harlacher, Mechthild, Dipl.-Ing.
(86) Internationale Anmeldenummer: EP9803249
(87) Internationale Veröffentlichungsnummer: WO9855838

(56) Entgegenhaltungen:
- DE-A- 3 832 947
- DE-A- 3 832 948
- DE-A- 3 941 634
- DE-A- 3 941 933
- JENA VON A ET AL: "ULTRASOUND GAS-FLOW METER FOR HOUSEHOLD APPLICATION" SENSORS AND ACTUATORS A, Bd. A37/38, 1. Juni 1993, Seiten 135-140, XP000411386

## Beschreibung

Die Erfindung betrifft eine Einrichtung bestehend aus einem USW (Ultraschallwandler) und einem den USW enthaltenden Bauteil zum Befestigen des USW an einem Meßgerät zur Ultraschall-Durchflußmessung eines strömenden Gases oder einer strömenden Flüssigkeit, mit einer in dem Bauteil ausgebildeten Aufnahmeöffnung für den USW und mit einer zwischen der Wand der Aufnahmeöffnung und dem USW angeordneten Halterung.

Die akustische Volumenstrommessung, insbesondere von Gasen, gewinnt mehr und mehr an Bedeutung. Dabei wird mit mindestens zwei USW gearbeitet, die innerhalb eines Meßrohres einen Schallpfad definieren. Jeder USW arbeitet sowohl als Sender als auch als Empfänger.

Dabei ist es von wesentlicher Bedeutung, die USW gegenüber dem Gehäuse des Meßgerätes akustisch zu entkoppeln. Man spricht hier von einer Körperschallentkopplung. Zum einen soll eine festkörpergebundene Signalübertragung zwischen dem jeweiligen Sender und dem jeweiligen Empfänger verhindert werden. Zum anderen geht es darum, die Einkopplung von durch Fremdschallquellen erzeugtem Störschall möglichst weitgehend zu unterdrücken.

Aus der DE 3941634 A1 ist eine Einrichtung der eingangs genannten Art bekannt, bei der die Halterung aus einem O-Ring besteht. Dieser liegt in einer Nut des Wandlergehäuses und wird von einem Deckel derart gegen eine Stufe des Gehäuses verspannt, daß sich gegenüber dem Deckel und der Stufe eine doppelte Linienberührung ergibt.

Eine Halterung in Form eins O-Ringes ist ferner aus der DE 38 32947 A1 bekannt.

Es wurde gefunden, daß diese Art der akustischen Entkoppelung verbesserungsfähig ist, und der Erfindung liegt daher die Aufgabe zugrunde, hierfür eine Möglichkeit zu schaffen.

Zur Lösung dieser Aufgabe ist die Einrichtung der eingangs genannten Art erfindungsgemäß dadurch gekennzeichnet, daß die Halterung eine Mehrzahl von Noppen aufweist, die mit dem USW oder mit der Wand der Aufnahmeöffnung fest verbunden und mit dem jeweils anderen Element formschlüssig verriegelt sind.

Es wurde gefunden, daß diese punktuelle Halterung den Körperschall wesentlich wirksamer entkoppelt als eine Linienpressung, wie sie bei einem O-Ring vorliegt. Die elektroakustischen Eigenschaften des USW werden durch die punktuelle Einspannung praktisch nicht beeinflußt. Dementsprechend bewirkt diese punktuelle Befestigung keine Verschlechterung der Übertragung des Schalls in das strömende Fluid. Gleichzeitig ergibt sich eine sehr exakte und zuverlässige Positionierung des USW, worin ein weiterer wesentlicher Vorteil zu sehen ist.

Ferner sei darauf hingewiesen, daß die erfindungsgemäße Einrichtung eine besonders einfache und kostengünstige Lösung darstellt. Im Falle eines zylindrischen USW ist es vorteilhaft, mit lediglich drei Noppen zu arbeiten. Allerdings ist die Erfindung nicht auf zylindrische USW eingeschränkt. Vielmehr kommen beliebige Bauformen infrage, wobei die Zahl der Noppen entsprechend angepaßt wird. Die zylindrische Ausführungsform ist allerdings besonders vorteilhaft.

Eine sehr günstige akustische Entkopplung des USW ergibt sich dadurch, daß die Noppen an einem Schallknoten des Wandlergehäuses positioniert sind.

Ferner werden die Abmaße der Noppen vorzugsweise so gewählt, daß sie kleiner sind als die Wellenlänge des Ultraschalls im Material des Wandlergehäuses. Unter dieser Bedingung bestimmt sich die Zahl der Noppen aus der Festigkeit des Materials und der Forderung, die gewünschte axiale und radiale Fixierung des USW zu erzielen.

Die Aufnahmeöffnung für den USW kann ohne weiteres im Gehäuse des Meßgerätes ausgebildet sein. Unter diesen Umständen bestehen die Noppen vorzugsweise aus elastischem Material. Die Halterung ist also elastisch, was sich günstig auf die Entkopplungseigenschaften auswirken kann. Eine besonders vorteilhafte Alternative zeichnet sich dadurch aus, daß die Aufnahmeöffnung für den USW in einem Einsatz angeordnet ist, der in das Gehäuse des Meßgerätes eingesteckbar ist. Diese Kostruktion bietet unter anderem die vorteilhafte Möglichkeit, den Einsatz aus elastischem Material auszubilden. Die Noppen können sodann starr sein und gegebenenfalls einen Bestandteil des Wandlergehäuses darstellen. Abgesehen davon kann die Verwendung eines Einsatzes auch dann vorteilhaft sein, wenn er aus starrem Material besteht.

Zur Herstellung der formschlüssigen Verriegelung greifen die Noppen in entsprechende Ausnehmungen ein, die entweder im Wandlergehäuse oder in der Wand der Aufnahmeöffnung ausgebildet sind. Besonders vorteilhaft ist die Verwendung einer umlaufenden Nut oder von Nutabschnitten. Bei elastischen Noppen sind letztere schmaler als die Noppen ausgebildet, um eine reibschlüssige Fixierung zu ermöglichen.

In diese Nut bzw. in diese Nutabschnitte können die Noppen eingeklippt werden, sei es, weil sie aus elastischem Material bestehen, sei es, weil die Nut bzw. die Nutabschnitte in dem elastischen Material des Einsatzes ausgebildet ist bzw. sind. In jedem Falle ergibt sich eine besonders einfache Konstruktion mit einem Minimum von Bauteilen.

Anstelle des Einklippens besteht die ebenfalls vorteilhafte Möglichkeit, die Nut bzw. die Nutabschnitte mit stirnseitig offenen Aussparungen zu versehen, durch die hindurch die Noppen bajonettverschlußartig in die Nut bzw. in die Nutabschnitte hineinverriegelt sind.

Dabei kann als zusätzliche Sicherung vorgesehen sein, daß die Aussparungen schmaler und/oder flacher als die Nut bzw. die Nutabschnitte sind. Am Orte der Aussparungen findet also ein Einklippen der Noppen statt, so daß sich diese nicht ohne weiteres aus dem Bajonettverschluß lösen können.

Die erfindungsgemäße Mehrpunkthalterung des USW bringt als weiteren Vorteil mit sich, daß der USW allseitig mit dem Betriebsdruck des Meßfluids beaufschlagt ist. Es treten also keine Differenzdrücke auf, die die Positionierung des USW gefährden könnten.

Im industriellen Einsatz müssen häufig Gase gemessen werden, die Feuchtigkeit mit sich führen, beispielsweise Kokereigas, Klärgas oder Druckluft. Dabei kann es zur Kondensatbildung kommen. Ferner führt das Meßgas häufig auch Wasser, Öl oder feste Schmutzstoffe mit sich. Kommt es zu Ablagerungen zwischen dem USW und der Wand seiner Aufnahmeöffnung, so verschlechtert sich die Körperschallentkopplung bis zur Unwirksamkeit. Um hier Abhilfe zu schaffen, wird in wesentlicher Weiterbildung der Erfindung vorgeschlagen, den freien Raum der Aufnahmeöffnung rings um den und vorzugsweise auch hinter dem USW mit einem verdrängenden Material zu füllen. Dieses Material dringt auch zwischen den Noppen in die Nut bzw. in die Nutabschnitte ein und bildet somit eine komplette Ausfüllung.

Vorteilhafterweise handelt es sich dabei um ein Material, das akustisch isolierend wirkt, aber den USW nicht starr einspannt oder bedämpft. Besonders günstige Ergebnisse wurden mit einem dauerelastischen, geschlossenporigen Schaum aus Polyurethan erzielt.

Die Erfindung wird im folgenden anhand bevorzugter Ausführungsbeispiele im Zusammenhang mit der beiliegenden Zeichnung näher erläutert. Die Zeichnung zeigt in:
Figur 1 einen axialen Teilschnitt durch eine erste Ausführungsform;
Figur 2 einen Schnitt entlang der Linie A-B in Figur 1;
Figur 3 eine höchst schematische Stirnansicht einer zweiten Ausführungsform;
Figur 4 einen Schnitt entsprechend Figur 1 durch eine dritte Ausführungsform;
Figur 5 einen Schnitt entlang der Linie A-B in Figur 4;
Figur 6 einen axialen Teilschnitt durch eine vierte Ausführungsform.

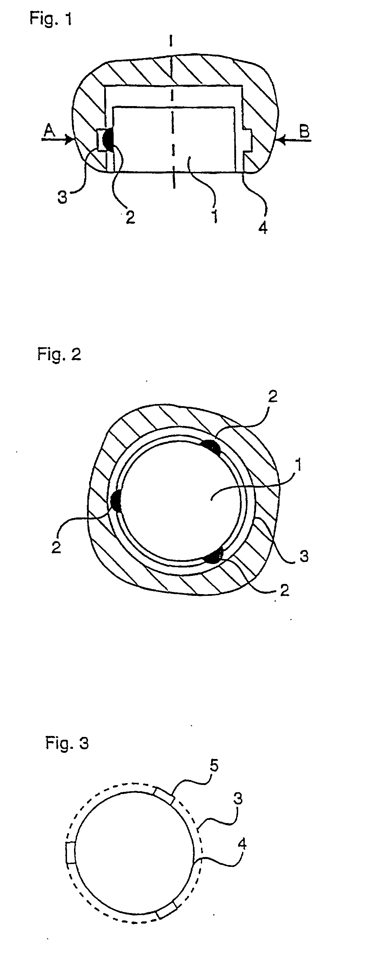

Die Figuren 1 und 2 zeigen einen USW 1, der auf seinem Umfang drei Noppen 2 aus elastischem Material trägt. Diese Noppen 2 sind in eine Nut 3 eingeklippt, die in der Wand einer Aufnahmeöffnung 4 ausgebildet ist.

Der Eingriff der Noppen 2 in die Nut 3 bildet eine formschlüssige Verriegelung des USW 1 in der Aufnahmeöffnung 4, wobei die elastischen Noppen für eine hervorragende Entkopplung des Körperschalls sorgen, ohne die elektroakustischen Eigenschaften des USW negativ zu beeinflussen. Die Anordnung ist so getroffen, daß die Noppen in einem Schallknoten des Wandlergehäuses liegen, wobei ihre Abmaße geringer sind als die Wellenlänge des Ultraschalls im Material des Wandlergehäuses. Gleichzeitig bilden die Noppen 2 eine zuverlässige Positionierung des USW 1.

Die Ausführungsform nach Figur 3 unterscheidet sich von der nach den Figuren 1 und 2 dadurch, daß die Nut 3 mit stirnseitig offenen Aussparungen 5 versehen ist, die eine bajonettverschlußartige Verriegelung der Noppen in der Nut ermöglichen. Dabei sind die Aussparungen 5 schmaler als die Noppen 2 und flacher als die Nut 3, so daß auch am Orte der Aussparungen ein gewisser Einklippeffekt auftritt. Die Noppen können sich nicht ohne weiteres aus der bajonettverschlußartigen Verriegelung lösen. Im übrigen ist die Nut 3 schmaler als die Noppen 2, so daß sich ein gewisser Reibschluß ergibt.

Die Ausführungsformen nach den Figuren 1 bis 3 bringen den zusätzlichen Vorteil mit sich, daß der USW allseitig mit dem Betriebsdruck des Meßfluids beaufschlagt wird, so daß keine Differenzdrücke auftreten können. Im übrigen zeigen sie deutlich, wie einfach und kostengünstig die hier vorgestellte konstruktive Lösung ist.

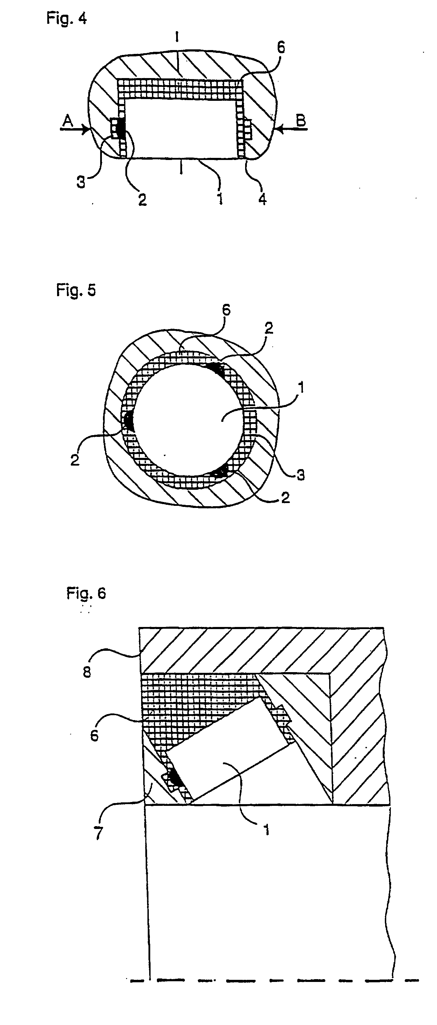

Die Ausführungsform nach den Figuren 4 und 5 unterscheidet sich von der nach den Figuren 1 und 2 dadurch, daß der freie Raum zwischen der Wand der Aufnahmeöffnung 4 und dem USW mit verdrängendem Material 6 gefüllt ist. Dadurch wird verhindert, daß Wasser sowie andere Kondensate und feste oder flüssige Schmutzstoffe in diesen Raum eindringen und die Körperschallentkopplung unwirksam machen. Das verdrängende Material besteht aus dauerelastischem, geschlossenporigem Polyurethanschaum und besitzt den Vorteil, daß es akustisch isolierend wirkt, aber den USW 1 nicht starr einspannt oder bedämpft.

Die Figuren 1 bis 5 lassen offen, in welchem Bauteil die Aufnahmeöffnung 4 ausgebildet ist. Häufig wird es sich dabei um das Gehäuse des Meßgerätes handeln.

Nach Figur 6 hingegen ist ein Einsatz 7 vorgesehen, der den USW 1 enthält und von der Stirnseite her in einen stirnseitigen Bereich 8 des Meßgeräte-Gehäuses eingesteckt ist. Die Anordnung des USW 1 im Einsatz 7 entspricht der Ausführungsform nach den Figuren 4 und 5.

Die Verwendung des Einsatzes 7 eignet sich insbesondere für Meßgeräte in extrem kurzer, kompakter Bauform, wie sie Gegenstand der Deutschen Patentanmeldung 197 13 526.9 sind.

Im Rahmen der Erfindung sind vielfältige Abwandlungsmöglichkeiten gegeben. So ist die Erfindung nicht auf zylindrische USW eingeschränkt. Vielmehr sind beliebige Querschnittsformen denkbar, wobei die Anzahl der Noppen der jeweiligen Querschnittsform angepaßt wird. Ein zylindrischer Querschnitt ist deshalb von Vorteil, weil mit der Mindestanzahl von drei Noppen gearbeitet werden kann. Abweichend von den dargestellten Ausführungsbeispielen kann die Nut im Wandlergehäuse ausgebildet sein, wobei dann die Noppen an der Wand der Aufnahmeöffnung sitzen. Im übrigen ist es nicht unbedingt erforderlich, für die formschlüssige Verriegelung eine Nut vorzusehen. Vielmehr sind beliebig geformte Ausnehmungen denkbar, solange sie eine formschlüssige Verriegelung ermöglichen.

Bei allen dargestellten Ausführungsbeispielen bestehen die Noppen aus elastischem Material. Unter Umständen ist es vorteilhafter, den Einsatz 7 nach Figur 6 aus elastischem Material herzustellen, wobei dann die Noppen aus hartem Material bestehen können und beispielsweise als Vorsprünge des Wandlergehäuses ausgebildet sind. Schließlich können sowohl die Noppen als auch das Material der Aufnahmeöffnung unelastisch ausgebildet sein. Allerdings ist eine elastische Halterung vorzuziehen.

Im übrigen besteht auch noch die Möglichkeit, die Noppen als Einzel-Bauteile zu montieren, wobei sie beispielsweise in relativ tiefe Ausnehmungen des einen Elements eingelegt und mit flacheren Ausnehmungen des anderen Elements verriegelt werden.

## Patentansprüche

1. Einrichtung bestehend aus einem USW (Ultraschallwandler) und einem den USW enthaltenden Bauteil zum Befestigen des USW an einem Meßgerät zur Ultraschall-Durchflußmessung eines strömenden Gases oder einer strömenden Flüssigkeit, mit einer in dem Bauteil ausgebildeten Aufnahmeöffnung (4) für den USW (1) und mit einer zwischen der Wand der Aufnahmeöffnung und dem USW angeordneten Halterung,
**durch gekennzeichnet**,
daß die Halterung eine Mehrzahl von Noppen (2) aufweist, die mit dem USW (1) oder mit der Wand der Aufnahmeöffnung (4) fest verbunden und mit dem jeweils anderen Element formschlüssig verriegelt sind.

2. Einrichtung nach Anspruch 1, **dadurch gekennzeichnet, daß** die Noppen (2) an einem Schallknoten des Wandlergehäuses positioniert sind.

3. Einrichtung nach Anspruch 1 oder 2, **dadurch gekennzeichnet, daß** die Maße der Noppen (2) kleiner sind als die Wellenlänge des Ultraschalls im Material des Wandlergehäuses.

4. Einrichtung nach einem der Ansprüche 1 bis 3, **dadurch gekennzeichnet, daß** die Noppen (2) aus elastischem Material bestehen.

5. Einrichtung nach einem der Ansprüche 1 bis 4, **dadurch gekennzeichnet, daß** die Aufnahmeöffnung (4) für den USW (1) in einem Einsatz (7) angeordnet ist, der in ein Gehäuse des Meßgerätes einsteckbar ist.

6. Einrichtung nach Anspruch 5, **dadurch gekennzeichnet, daß** der Einsatz (7) aus elastischem Material besteht.

7. Einrichtung nach einem der Ansprüche 1 bis 6, **gekennzeichnet durch** eine umlaufende Nut (3) bzw. Nutabschnitte zur formschlüssigen Verriegelung der Noppen (2).

8. Einrichtung nach Anspruch 7, **dadurch gekennzeichnet, daß** die Nut (3) bzw. die Nutabschnitte stirnseitig offene Aussparungen (5) aufweist bzw. aufweisen, durch die hindurch die Noppen (2) bajonettverschlußartig in die Nut bzw. in die Nutabschnitte hineinverriegelt sind.

9. Einrichtung nach Anspruch 8, **dadurch gekennzeichnet, daß** die Aussparungen (5) schmaler und/oder flacher als die Nut (3) bzw. die Nutabschnitte sind.

10. Einrichtung nach einem der Ansprüche 1 bis 9, **dadurch gekennzeichnet, daß** der freie Raum der Aufnahmeöffnung (4) rings um den und vorzugsweise auch hinter dem USW (1) mit einem verdrängenden Material (6) gefüllt ist, das akustisch isolierend wirkt, ohne den USW starr einzuspannen oder zu bedämpfen.

11. Einrichtung nach Anspruch 10, **dadurch gekennzeichnet, daß** das verdrängende Material ein dauerelastischer, geschlossenporiger Schaum ist, vorzugsweise aus Polyurethan.

## Claims

1. Device consisting of an ultrasound transducer and a component containing the ultrasound transducer to fasten the transducer to a measuring device for the ultrasonic flow metering of a flowing gas or a flowing liquid, with an opening (4) in the component to accommodate the ultrasound transducer (1) and with a bracket arranged between the wall of the opening and the transducer,
**characterised in that**
the bracket exhibits a plurality of nipples (2) which are firmly connected to the ultrasound transducer (1) or to the wall of the opening (4) and interlock with the respective other element.

2. Device according to claim 1, **characterised in that** the nipples (2) are positioned on a sound node of the transducer housing.

3. Device according to claim 1 or 2, **characterised in that** the dimensions of the nipples (2) are smaller than the wave length of the ultrasound in the material of the transducer housing.

4. Device according to any one of claims 1 through 3, **characterised in that** the nipples (2) are made of elastic material.

5. Device according to any one of claims 1 through 4, **characterised in that** the opening (4) for the transducer (1) is arranged in an insert (7) which can be inserted into a housing of the metering device.

6. Device according to claim 5, **characterised in that** the insert (7) is made of elastic material.

7. Device according to any one of claims 1 through 6, **characterised by** a circular groove (3) or by groove sections running around the opening (1) for the interlocking of the nipples (2).

8. Device according to claim 7, **characterised in that** the groove (3) exhibits on its face or the groove sections exhibit on their faces open recesses (5) through which the nipples (2) are bayonet-locked into the groove or the groove sections.

9. Device according to claim 8, **characterised in that** the recesses (5) are narrower and/or flatter than the groove (3) or the groove sections.

10. Device according to any one of claims 1 through 9, **characterised in that** the space in the opening (4) is filled with a displacing material (6) around and preferably also behind the ultrasound transducer (1), said displacing material (6) acting as sound insulation without rigidly clamping or dampening the ultrasound transducer.

11. Device according to claim 10, **characterised in that** the displacing material is a permanently elastic, closed-pore foam, preferably polyurethane.

## Revendications

1. Dispositif, composé d'un TUS (transducteur à ultrasons) et d'un élément contenant le TUS, pour la fixation du TUS sur un appareil de mesure, destiné à compter le débit à ultrasons d'un gaz s'écoulant ou d'un liquide s'écoulant, avec une ouverture de réception (4) formée dans l'élément pour recevoir le TUS (1), et avec une fixation disposée entre la paroi de l'ouverture de réception et le TUS, **caractérisé par le fait que** la fixation présente plusieurs nopes (2) fermement liés au TUS (1) ou à la paroi de l'ouverture de réception (4) et étant verrouillées de façon crabotée avec l'autre élément respectif.

2. Dispositif suivant la revendication 1, **caractérisé par le fait que** les nopes (2) sont positionnées à un noeud de son du carter du transducteur.

3. Dispositif suivant l'une des revendications 1 ou 2, **caractérisé par le fait que** les dimensions des nopes (2) sont plus petites que la longueur d'onde de l'ultrason dans le matériau du carter du transducteur.

4. Dispositif suivant l'une des revendications 1 à 3, **caractérisé par le fait que** les nopes (2) consistent en un matériau élastique.

5. Dispositif suivant l'une des revendications 1 à 4, **caractérisé par le fait que** l'ouverture de réception (4) pour le TUS (1) est disposée dans un insert (7) pouvant être encastré dans un carter de l'appareil de mesure.

6. Dispositif suivant la revendication 5, **caractérisé par le fait que** l'insert (7) consiste en un matériau élastique.

7. Dispositif suivant l'une des revendications 1 à 6, **caractérisé par** une rainure circulante (3) resp. des sections de rainure pour le verrouillage de façon crabotée des nopes (2).

8. Dispositif suivant la revendication 7, **caractérisé par le fait que** la rainure (3) resp. les sections de rainure présente(nt) à la partie frontale des creux (5) ouverts à travers lesquels les nopes (2) sont verrouillées à la manière d'un joint à baïonnette dans la rainure resp. les sections de rainure.

9. Dispositif suivant la revendication 8, **caractérisé par le fait que** les creux (5) sont plus minces et/ou plats que la rainure (3) resp. les sections de rainure.

10. Dispositif suivant l'une des revendications 1 à 9, **caractérisé par le fait que** l'espace libre de l'ouverture de réception (4) est remplie, autour et de préférence également derrière le TUS (1), d'un matériel déplaçant (6) agissant comme isolement acoustique sans serrer de façon rigide ou amortir le TUS.

11. Dispositif suivant la revendication 10, **caractérisé par le fait que** le matériel déplaçant consiste en une mousse durablement élastique et expansée, de préférence en polyuréthane.
